Europäisches Patentamt

European Patent Office

Office européen des brevets

(19)

(11) Numéro de publication : **0 349 423 B1**

(12)

# FASCICULE DE BREVET EUROPEEN

(45) Date de publication du fascicule du brevet :
**22.01.92 Bulletin 92/04**

(51) Int. Cl.⁵ : **B62B 3/10**

(21) Numéro de dépôt : **89401849.8**

(22) Date de dépôt : **28.06.89**

(54) **Chariot d'achat de type emboîtable comportant un plateau escamotable sous la corbeille de ce chariot.**

(30) Priorité : **30.06.88 FR 8808818**

(43) Date de publication de la demande :
**03.01.90 Bulletin 90/01**

(45) Mention de la délivrance du brevet :
**22.01.92 Bulletin 92/04**

(84) Etats contractants désignés :
**BE CH DE ES GB IT LI LU NL**

(56) Documents cités :
**DE-A- 2 742 958**
**DE-A- 3 444 969**
**US-A- 2 890 058**
**US-A- 2 903 269**

(73) Titulaire : **ATELIERS REUNIS CADDIE**
**13, rue de la Mairie**
**F-67300 Schiltigheim (FR)**

(72) Inventeur : **Le Marchand, Alain**
**1, Rue de Vendée**
**F-67116 Reichstett (FR)**

(74) Mandataire : **Tony-Durand, Serge et al**
**Cabinet Tony-Durand 77, rue Boissière**
**F-75116 Paris (FR)**

Jouve, 18, rue Saint-Denis, 75001 PARIS

## Description

La présente invention concerne les chariots d'achat mis à la disposition de la clientèle dans les magasins en libre-service, et plus précisément les chariots d'achat de type emboîtable.

Les chariots de ce genre comportent une corbeille de transport destinée à recevoir les objets achetés par l'utilisateur, laquelle se trouve située à une certaine hauteur par rapport au sol. A son extrémité arrière, cette corbeille est fermée par un volet monté librement pivotant à l'endroit de son bord supérieur. Ceci permet l'engagement de l'extrémité avant de la corbeille d'un autre chariot identique lors de l'emboîtement de ces chariots les uns à l'intérieur des autres lorsqu'ils se trouvent en attente d'utilisation.

Pour permettre le transport d'objets volumineux, tels que des caisses ou cartons contenant des bouteilles de bière ou autres boissons, certains des chariots de ce genre sont pourvus d'un support supplémentaire susceptible d'être escamoté sous la corbeille de transport lorsqu'il n'est pas utilisé.

Ces chariots peuvent être rangés en deux catégories, à savoir ceux dans lesquels le support supplémentaire consiste en une tablette ou similaire portée par des bras pivotants susceptibles d'être déployés vers l'arrière et ceux dans lesquels ce support est constitué par un plateau monté coulissant sur des éléments de support, eux-mêmes portés par le châssis inférieur du chariot.

Parmi les chariots de la première catégorie, on peut ranger ceux décrits dans la demande de brevet EP 141.398. En effet celle-ci concerne des chariots dans lesquels il est prévu un support supplémentaire consistant en une tablette portée par deux bras latéraux dont les extrémités inférieures sont montées articulées sur les côtés du châssis de façon à pouvoir pivoter vers l'arrière, cette tablette étant par ailleurs reliée à la corbeille du chariot, ou à son châssis, par des moyens articulés ou coulissants de retenue. Du fait de ce mode de montage, lorsque la tablette est déployée dans sa position d'utilisation, elle est soutenue à la fois à l'avant par les moyens de liaison prévus avec la corbeille ou le châssis du chariot, et à l'arrière par les deux bras pivotants montés articulés sur le châssis. Toutefois cette solution est relativement complexe et coûteuse. Par ailleurs elle a l'inconvénient d'être fragile du fait même du nombre des diverses pièces mobiles et des articulations prévues. Or les chariots de ce genre doivent être particulièrement robustes pour pouvoir résister aux nombreuses manipulations subies lors de leur utilisation, ainsi qu'aux chocs encaissés lors de leur emboîtement en position d'attente.

Quant aux chariots de la seconde catégorie, ils comprennent des chariots tels que ceux décrits dans les brevets US 2.890.058 et 2.903.269, ainsi que dans la publication DE 34.44.969. En effet ces chariots comportent un support supplémentaire escamotable constitué par un plateau monté coulissant dans le sens longitudinal entre une position d'escamotage sous la corbeille de transport et une position d'utilisation dans laquelle il est dégagé, tout au moins en partie, en arrière de celle-ci.

Tout en ayant l'avantage d'être plus simples que les chariots de la première catégorie mentionnée ci-dessus, les chariots de cette seconde catégorie présentent également un certain nombre d'inconvénients. L'un de ceux-ci réside dans le risque de coincement du plateau mobile ou similaire qui est ainsi prévu. Ces risques sont d'autant plus importants que le support de ce plateau est soumis à des chocs répétés lors de l'emboîtement des chariots les uns dans les autres. Or ces chocs sont de nature à provoquer des déformations des organes de coulissement et par suite des risques de coincement. Par ailleurs, les solutions actuellement proposées ne permettent pas que les supports supplémentaires ainsi prévus puissent recevoir des charges importantes. En conséquence les chariots correspondants ne peuvent pas être utilisés pour le transport d'objets qui seraient à la fois lourds et volumineux.

C'est pourquoi la présente invention a pour but de réaliser un chariot correspondant à la seconde catégorie mentionnée ci-dessus, mais qui est conçu de façon à éviter les inconvénients des chariots actuels de ce type. A cet effet la conception de ce chariot est telle que le plateau escamotable de transport prévu dans celui-ci soit susceptible de recevoir des charges importantes et qu'il soit exempt de tout risque de coincement lors de des manipulations. Par ailleurs, l'agencement de ce chariot est déterminé de façon que ce plateau supplémentaire ne gène en aucune façon l'emboîtement d'une série de chariots de ce type les uns dans les autres.

A cet effet, l'invention a pour objet un chariot, notamment chariot d'achat, comportant une corbeille de transport fixée sur le châssis inférieur de ce chariot et disposée à une certaine hauteur au-dessus du niveau des roues, ainsi qu'un plateau destiné à servir de support à une caisse ou autre objet volumineux, et qui est monté mobile entre une position d'escamotage sous la corbeille et une position horizontale d'utilisation en arrière de celle-ci (DE-A-3444969), caractérisé en ce que :

— ce plateau est monté à la fois coulissant et basculant sur un axe transversal et horizontal, porté par le châssis inférieur, et qui est engagé dans des coulisses prévues sur l'un et l'autre côtés de ce plateau,

— l'agencement est tel que dans l'une et l'autre de ses positions extrêmes, ce plateau se trouve monté en porte à faux sur cet axe, soit vers l'arrière, soit vers l'avant,

— une butée est prévue sur le châssis pour retenir l'extrémité avant du plateau vers le haut, lorsque celui-ci est dégagé en arrière afin qu'il se maintienne stable dans une position horizontale sous le simple effet de son propre poids,

— et le châssis porte également une traverse horizontale, située en avant de l'axe et à une plus faible hauteur que cet axe, cette traverse étant apte à soutenir le plateau mobile lorsque celui-ci est escamoté sous la corbeille de transport, afin de le maintenir dans une position inclinée vers l'avant permettant l'emboîtement de plusieurs chariots de ce type les uns dans les autres.

Grâce à l'agencement prévu, il n'existe aucun risque de coincement du plateau supplémentaire lors de sa manoeuvre. Par ailleurs, celui-ci est en mesure de supporter des charges qui sont à la fois lourdes et volumineuses. D'autre part, malgré la présence de ce plateau mobile, la structure du chariot reste très simple et celui-ci peut être aisément emboîté avec d'autres chariots identiques sans aucun risque de détérioration ou de coincement du support supplémentaire ainsi prévu.

Cependant d'autres particularités et avantages du chariot selon l'invention apparaitront au cours de la description suivante. Celle-ci est donnée en référence au dessin annexé à simple titre indicatif, et sur lequel :

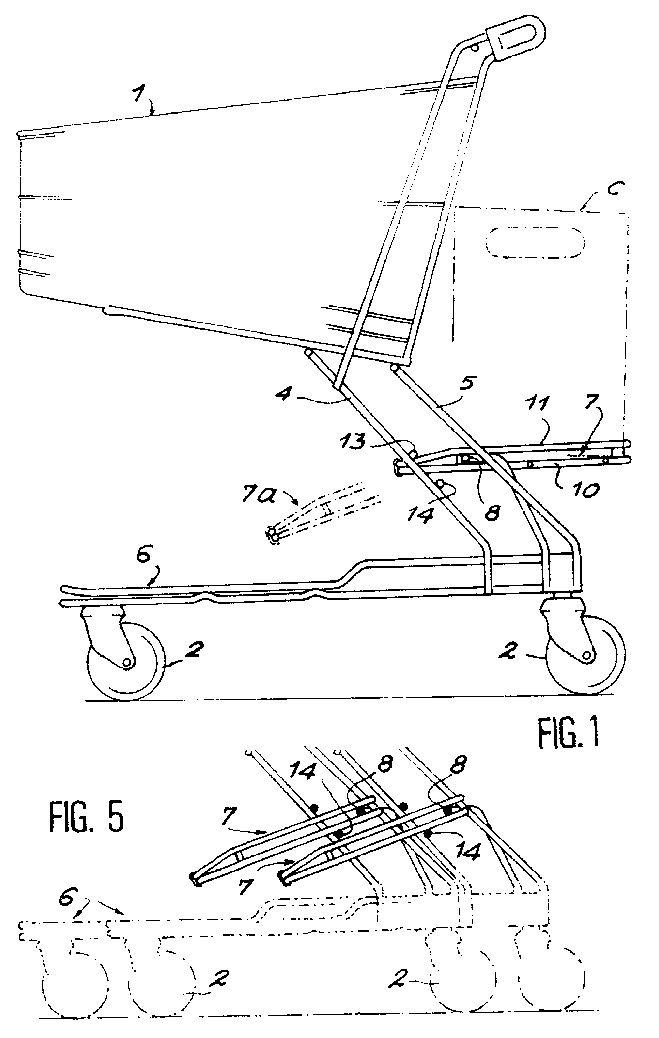

La figure 1 est une vue en élévation de côté du présent chariot dont le plateau supplémentaire de transport est représenté en traits pleins dans sa position d'utilisation et en traits mixtes dans sa position d'escamotage.

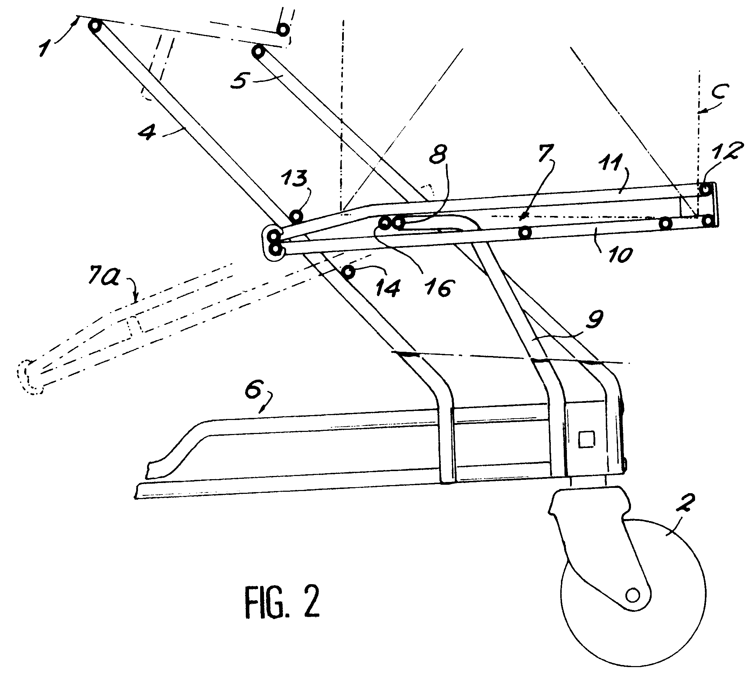

La figure 2 est une vue partielle en élévation, à échelle différente.

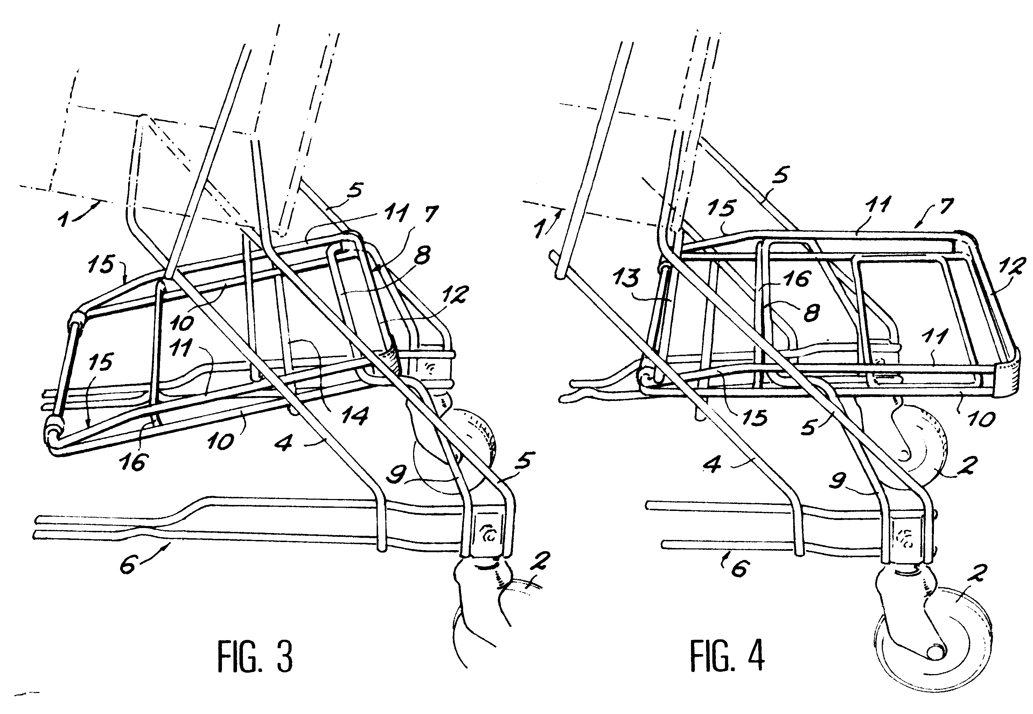

Les figures 3 et 4 sont des vues en perspective représentant l'une et l'autre des deux positions prévues pour le plateau supplémentaire de transport.

La figure 5 est une vue schématique en élévation de côté illustrant l'emboîtement de deux chariots selon l'invention.

Le chariot représenté comporte une corbeille de transport 1 disposée à une certaine hauteur au-dessus du niveau des roues 2. Cette corbeille est fixée sur un châssis inférieur désigné par la référence générale 3 et qui comporte, sur chaque côté, deux montants parallèles 4 et 5 constitués par les branches latérales de deux arceaux en fil ou tube métallique. A leur pied, ces montants sont solidaires d'une plateforme horizontale 6 supportée par les roues 2. Pour permettre l'emboîtement de plusieurs chariots les uns dans les autres, cette plateforme est constituée par une ceinture de forme trapézoïdale qui est complètement ouverte à son extrémité arrière.

Pour la même raison, la paroi arrière de la corbeille de transport 1 est constituée par un volet pivotant monté articulé à l'endroit de son bord supérieur. Par ailleurs, à la partie supérieure de son extrémité arrière, cette corbeille est pourvue d'un organe de préhension et de manoeuvre.

Le présent chariot est équipé d'un plateau supplémentaire de transport désigné par la référence générale 7 et qui peut être avantageusement constitué par une grille en fil métallique. Ce plateau est disposé à une hauteur intermédiaire entre la plateforme inférieure 6 et le fond de la corbeille 1. Il est monté à la fois coulissant et basculant sur une traverse horizontale 8 s'étendant entre les deux montants arrière 5 du châssis. Dans l'exemple représenté, cette traverse est constituée par la branche centrale d'un arceau 9 en fil métallique dont les branches latérales font partie du châssis inférieur 3.

La traverse 8 est engagée dans des coulisses latérales prévues sur chaque côté du plateau mobile 7. Chacune de ces coulisse est constituée par le bord latéral correspondant 10 du plateau mobile et un fil métallique 11 s'étendant au-dessus de ce bord. Ces deux fils métalliques 11 peuvent être constitués par les deux branches latérales d'un fil métallique 12 coudé en U dont la branche centrale s'étend au-dessus du bord arrière du plateau mobile 7. Ainsi ce fil métallique constitue en plus une rembarde susceptible d'assurer le maintien d'un objet volumineux sur le plateau 7.

Les coulisses latérales 10-11 s'étendent à peu près sur toute la largeur du plateau mobile 7. Grâce à cet agencement celui-ci peut occuper deux positions utiles, à savoir :

• une position 7a d'escamotage sous la corbeille 1

• et une position horizontale d'utilisation en arrière de cette corbeille.

Dans l'un et l'autre cas le plateau mobile 7 se trouve en quelque sorte monté en porte à faux sur la traverse 8. Dans le premier cas (position escamotée), il s'étend en avant de celle-ci, cependant que dans l'autre cas (position d'utilisation), il s'étend en arrière de cette traverse.

Le châssis inférieur 3 porte une traverse horizontale 13 qui s'étend entre les deux montants avant 4 du châssis inférieur. Le niveau de cette traverse est tel que celle-ci puisse servir de butée vers le haut pour l'extrémité avant du plateau mobile 7 lorsque celui-ci est dégagé en arrière, dans sa position horizontale d'utilisation. Ainsi ce plateau se trouve maintenu stable dans cette position par le simple effet de son propre poids qui tend à le faire pivoter autour de la traverse 8 du fait de son montage en porte à faux.

Cependant le châssis 3 porte une autre traverse horizontale 14 qui s'étend entre les deux montants avant 4. Cette traverse est située en avant de l'axe de basculement constitué par la traverse 8 et à une plus faible hauteur que celle-ci. En effet, cette traverse 14 est destinée à servir de support au plateau mobile 7 lorsqu'il est dans sa position 7a d'escamotage, et ce de façon à le maintenir incliné vers l'avant. La stabilité du plateau dans cette position est automatiquement assurée par le simple effet de son poids en raison de son montage en porte à faux à l'avant de l'axe 8.

Pour faire passer le plateau 7 de l'une de ces positions à l'autre, il suffit de le tirer ou de le pousser dans le sens longitudinal. Ainsi, pour assurer son escamotage à partir de sa position d'utilisation, il suffit de le pousser vers l'avant. Il se produit alors un coulissement des coulisses 10-11 sur la traverse fixe 8. Lorsque le milieu du plateau a dépassé la position de l'axe 8, le poids de ce plateau tend automatiquement à le faire basculer vers l'avant, jusqu'à ce qu'il vienne reposer sur la traverse 14 de support. Cependant pour faciliter ce mouvement de basculement, le bord avant des fils latéraux 11 peut être incliné de façon à constituer des rampes 15 placées au contact de la traverse 13 formant butée. Ainsi, dès le début même du mouvement du plateau 7 vers l'avant, ceci l'amène à basculer vers le bas.

Pour amener ensuite ce plateau à nouveau en position d'utilisation, il suffit de le tirer en arrière, jusqu'à ce qu'une traverse 16, portée par ce plateau vienne buter contre la traverse fixe 8. Sous l'effet de son poids, le plateau 7 bascule automatiquement en fin de mouvement dans sa position horizontale, c'est-à-dire jusqu'à ce que son extrémité avant vienne en butée contre la traverse 13 prévue à cet effet. Dans cette position de dégagement en arrière, le plateau 7 est susceptible de recevoir un objet particulièrement volumineux et qui peut éventuellement être relativement lourd. En effet, la structure prévue permet au plateau 7 de pouvoir supporter des charges importantes.

Il faut également observer que dans sa position inclinée d'escamotage 7a, le plateau mobile 7 permet d'emboîter aisément une série de chariots du même type les uns dans les autres. Du reste, la figure 5 illustre cette possibilité d'emboîtement de deux chariots identiques l'un dans l'autre. Comme on peut le constater, les plateaux 7 de ces chariots se trouvent alors disposés partiellement l'un au dessus de l'autre dans des positions inclinées. Par contre, le maintien de ces plateaux dans une position horizontale n'aurait pas permis de procéder à l'emboîtement de ces chariots les uns dans les autres.

Ainsi qu'il a déjà été indiqué, le mode de montage du plateau mobile 7 permet d'éviter tout risque de coincement lors de la manoeuvre de celui-ci. Par ailleurs, la structure prévue est très robuste et peut subir sans aucun inconvénient des manipulations multiples ainsi que les chocs répétés dûs à l'emboîtement des chariots les uns dans les autres lorsqu'ils sont placés en position d'attente d'utilisation.

Cependant le présent chariot n'est pas limité à l'exemple de réalisation décrit ci-dessus. Ainsi au lieu de prévoir un axe de basculement et de coulissement constitué par une traverse 8 s'étendant sur toute la largeur du châssis, il serait possible de prévoir deux axes horizontaux distincts portés par l'un et l'autre des montants latéraux 4 du châssis, ces axes étant engagés dans les coulisses latérales respectives du plateau 7. Par ailleurs la structure du châssis inférieur du chariot peut être réalisée de façon différente. Ainsi ce châssis pourrait être dépourvu de toute plateforme ou ceinture inférieure, pour être constitué, sur chaque côté, par deux jambes d'appui disposées sous la forme générale d'un V renversé et dont les extrémités inférieures portent respectivement la roue avant et la roue arrière du côté correspondant, les jambes d'appui prévues à l'avant étant reliées par une ou plusieurs traverses. Dans un tel cas les différents éléments de guidage de support du plateau escamotable 7 -c'est-à-dire l'axe 8 ainsi que les traverses 13 et 14- seraient alors portés par les jambes d'appui prévues à l'arrière du châssis. Mais encore une fois de nombreuses autres variantes peuvent être envisagées.

Ainsi qu'il a déjà été indiqué, le présent chariot est destiné plus spécialement à être mis à la disposition de la clientèle des magasins de vente en libre-service afin que celle-ci puisse transporter un ou plusieurs objets volumineux, en plus des objets de faible encombrement placés de la façon habituelle à l'intérieur de la corbeille de transport. Ceci permet de transporter aisément des objets volumineux tels que des caisses ou cartons d'emballage contenant des bouteilles de bière ou autre boisson, ou bien encore d'autres emballages particulièrement encombrants.

## Revendications

1. Chariot, notamment chariot d'achat, comportant une corbeille de transport fixée sur le châssis inférieur de ce chariot et disposée à une certaine hauteur au-dessus du niveau des roues, ainsi qu'un plateau destiné à servir de support à une caisse ou autre objet volumineux, et qui est monté mobile entre une position d'escamotage sous la corbeille et une position horizontale d'utilisation en arrière de celle-ci, caractérisé en ce que :

— ce plateau (7) est monté à la fois coulissant et basculant sur un axe transversal et horizontal (8), porté par le châssis inférieur (3), et qui est engagé dans des coulisses (10-11) prévues sur l'un et l'autre côtés de ce plateau,

— l'agencement est tel que dans l'une et l'autre de ses positions extrêmes, ce plateau se trouve monté en porte à faux sur cet axe (8), soit vers l'arrière, soit vers l'avant,

— une butée (13) est prévue sur le châssis (3) pour retenir l'extrémité avant du plateau vers le haut, lorsque celui-ci est dégagé en arrière afin qu'il se maintienne stable dans une position horizontale sous le simple effet de son propre poids,

— et le châssis (3) porte également une traverse horizontale (14), située en avant de l'axe (8) et à une plus faible hauteur que cet axe, cette traverse étant apte à soutenir le plateau mobile lorsque celui-ci est escamoté sous la corbeille de transport (1), afin de le maintenir dans une position inclinée vers l'avant permettant l'emboîtement de plusieurs chariots de ce type les uns dans les autres.

2. Chariot selon la revendication 1, caractérisé en ce que les coulisses latérales (10-11) du plateau mobile sont formées par un fil métallique (12) s'étendant au-dessus des bords latéraux de ce plateau et formant également une rambarde de retenue.

3. Chariot selon l'une des revendications précédentes, caractérisé en ce que l'axe (8) de coulissement et de basculement du plateau mobile (7) est constitué par la branche centrale d'un arceau (9) en fil métallique faisant partie du châssis inférieur (3) de ce chariot.

4. Chariot selon l'une des revendications précédentes, caractérisé en ce que la butée de retenue de l'extrémité avant du plateau mobile (7) vers le haut, lorsque ce plateau est en position d'utilisation, est constituée par une traverse horizontale (13) portée par le châssis inférieur (3) de ce chariot.

5. Chariot selon les revendications 1 et 4, caractérisé en ce que le châssis inférieur (3) comportant deux montants (4, 5) disposés à l'arrière sur chaque côté, l'axe (8) de coulissement et de basculement du plateau mobile (7) s'étend entre les deux montants (5) situés les plus en arrière, cependant que les traverses (14-13) servant de soutien ou de butée pour le plateau mobile (7), sont fixées entre les deux montants (4) placés devant.

**Patentansprüche**

1. Wagen, insbesondere Einkaufswagen, mit einem dem Transport dienenden Korb, der an dem Untergestell des Wagens befestigt und in einer gewissen Höhe über dem Niveau von Rädern angeordnet ist, und mit einer Plattform, die zur Aufnahme einer Kiste oder eines anderen voluminösen Gegenstands dient und die zwischen einer unter den Korb eingeschobenen Stellung und einer horizontalen Gebrauchsstellung hinter diesem bewegbar gelagert ist, dadurch gekennzeichnet, daß

— die Plattform (7) gleitend und dabei kippend auf einer transversalen und horizontalen Achse (8) gelagert ist, die an dem Untergestell (3) angeordnet ist und die in Kulissen (10 bis 11) eingreift, die auf der einen und der anderen Seite der Plattform vorgesehen sind,

— die Anordnung so getroffen ist, daß in der einen und in der anderen Extremstellung die Plattform mit Überhang zu dieser Achse (8) angeordnet ist, sei es Dach hinten, sei es nach vorn,

— ein Anschlag (13) auf dem Untergestell (3) vorgesehen ist, um das vordere Ende der Plattform von oben abzustützen, wenn die Plattform nach hinten gezogen ist, damit sie stabil in einer horizontalen Position unter dem Einfluß ihres Eigengewichts bleibt,

— und das Untergestell (3) eine horizontale Traverse (14) aufweist, die vor der Achse (8) und in geringerer Höhe als die Achse angeordnet ist, wobei diese Traverse die bewegliche Plattform in der unter den dem Transport dienenden Korb (1) eingeschobenen Stellung abstützt, damit sie in einer nach vorn geneigten Position verbleibt, in der das Ineinanderschieben mehrerer Wagen dieses Typs möglich ist.

2. Wagen nach Anspruch 1, dadurch gekennzeichnet, daß die seitlichen Kulissen (10 bis 11) der beweglichen Plattform von einem Metalldraht (12) gebildet werden, der sich oberhalb der seitlichen Ränder der Plattform erstreckt uns zugleich ein Rückhaltegeländer bildet.

3. Wagen nach einem der vorangehenden Ansprüche, dadurch gekennzeichnet, daß die zum Gleiten und Kippen der beweglichen Plattform (7) dienende Achse (8) von dem zentralen Abschnitt eines Bogenstücks (9) aus Metalldraht gebildet ist, der Bestandteil des Untergestells (3) des Wagens ist.

4. Wagen nach einem der vorangehenden Ansprüche, dadurch gekennzeichnet, daß der Anschlag zum Abstützen des vorderen Endes der beweglichen Plattform (7) in der Gebrauchsstellung von oben von einer horizontalen Traverse (13) des Untergestells (3) des Wagens gebildet ist.

5. Wagen nach Anspruch 1 und 4, dadurch gekennzeichnet, daß das Untergestell (3) zwei Stützstäbe (4, 5) aufweist, die hinten an jeder Ecke angeordnet sind, und daß die zum Gleiten und Kippen der beweglichen Plattform (7) dienende Achse (8) sich zwischen den beiden hintersten Stützstäben (5) erstreckt, während die Traversen (14, 13), die zur Abstützung der beweglichen Plattform (7) von unten oder oben dienen, zwischen den beiden vorderen Stützstäben (4) fixiert sind.

**Claims**

1. A cart, more particularly a shopping cart, comprising a transport basket fixed to the bottom frame of the cart and placed at a certain height above the level of the wheels, together with a tray intended for serving as a support for a container or other bulky object, and which is mounted so as to be movable between a retracted position below said basket and an extended horizontal position of utilization rearwardly of said retracted position, **characterized** in that :

— the tray (7) is mounted so as to be slidable and tiltable about a transversal and horizontal axis (8) carried by the bottom frame (3), said tray being engaged within slides (10, 11) provided respectively along both sides of said tray ;

— the arrangement is such that in both its end positions, the tray is mounted in a cantilevered situation about said axis (8), either rearwardly or forwardly ;

— a stop member (13) is provided on the frame (3) for holding back the front end of the tray in the upward direction when said tray is extended rearwardly, in order to keep it stable in an horizontal position, under the mere effect of its own weight; and

— the frame (3) also carries an horizontal crossbar (14) located forwardly of the axis (8) and at a lower level than said axis, this crossbar being adapted for supporting the movable tray when it is retracted below the transport basket (1), in order to maintain it in a forwardly slanting position enabling several carts of this type to be nested into each other.

2. A cart according to Claim 1, characterized in that the lateral slides (10, 11) of the movable tray are formed by a metal wire (12) extending above the lateral edges of said tray and further forming a retaining guardrail.

3. A cart according to one of the previous Claims, characterized in that the sliding and tilting axis (8) of the movable tray (7) is constituted by the central limb of a metal wire hoop (9) forming part of the bottom frame (3) of said cart.

4. A cart according to one of the previous Claims, characterized in that the stop member provided for retaining the front end of the movable tray (7) in the upward direction when this tray is in the position of utilization, is constituted by an horizontal crossbar (13) carried by the bottom frame (3) of said cart.

5. A cart according to Claims 1 and 4, characterized in that, while the bottom frame (3) comprises two uprights (4, 5) disposed at the rear on each side, the sliding and tilting axis (8) of the movable tray (7) extends between the two rearmost uprights (5), while the crossbars (14, 13) serving as support or stop member for the movable tray (7) are fixed between the two uprights (4) located at the front.

1

C

4

5

11

7

13

10

7a

14

8

6

2

2

FIG. 1

FIG. 5

14

8

8

7

7

14

6

2

2

FIG. 2

EP 0 349 423 B1

FIG. 4

FIG. 3